# EUROPEAN PATENT SPECIFICATION

(11) **EP 3 829 242 B1**
(45) Date of publication and mention of the grant of the patent: **09.08.2023**
(21) Application number: 19853510.6
(22) Date of filing: 21.08.2019
(51) Int. Cl.: H04W 72/04, H04L 5/00, H04W 72/00, H04B 7/0404, H04B 7/06

(54) **METHOD AND DEVICE FOR INDICATING SPACE-RELATED INFORMATION**
VERFAHREN UND VORRICHTUNG ZUR ANZEIGE VON RAUMBEZOGENEN INFORMATIONEN
PROCÉDÉ ET DISPOSITIF D'INDICATION D'INFORMATIONS LIÉES À L'ESPACE

(30) Priority: 29.08.2018 CN 201810996264
(43) Date of publication of application: 02.06.2021
(73) Proprietor: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: WANG, Fei, Beijing 100032 (CN); LI, Yan, Beijing 100032 (CN); HOU, Xueying, Beijing 100032 (CN); XIA, Liang, Beijing 100032 (CN); LIU, Guangyi, Beijing 100032 (CN)
(74) Representative: J A Kemp LLP
(86) International application number: PCT/CN2019/101769
(87) International publication number: WO 2020/042981

(56) References cited:
- WO-A1-2017/166322
- CN-A- 107 172 708
- CN-A- 108 282 885
- ERICSSON: "Remaining details of beam management", 3GPP DRAFT; R1-1804974 REMAINING DETAILS OF BEAM MANAGEMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Sanya, China; 20180416 - 20180420 7 April 2018 (2018-04-07), pages 1-13, XP051414297, Retrieved from the Internet: URL:http://www.3gpp.org/ftp/tsg%5Fran/WG1% 5FRL1/TSGR1%5F92b/Docs/ [retrieved on 2018-04-07]
- SAMSUNG: "UL beam management", 3GPP TSG RAN WG1 NR Ad-Hoc#2 Rl-1710653, 30 June 2017 (2017-06-30), XP051299860,
- "3rd Generation Partnership Project; Technical Specification Group Radio Access Network; NR; Medium Access Control (MAC) protocol specification (Release 15)", 3GPP STANDARD; TECHNICAL SPECIFICATION; 3GPP TS 38.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.1.0, 2 April 2018 (2018-04-02), pages 1-67, XP051450732,

## Description

### CROSS-REFERENCE TO RELATED APPLICATION

The application claims priority to Chinese Patent Application No. 201810996264.5, filed on August 29, 2018.

### TECHNICAL FIELD

The embodiments of disclosure relate to the technical field of communications, and in particular to methods for indicating spatial relation information, a base station, a terminal, and computer-readable storage mediums.

### BACKGROUND

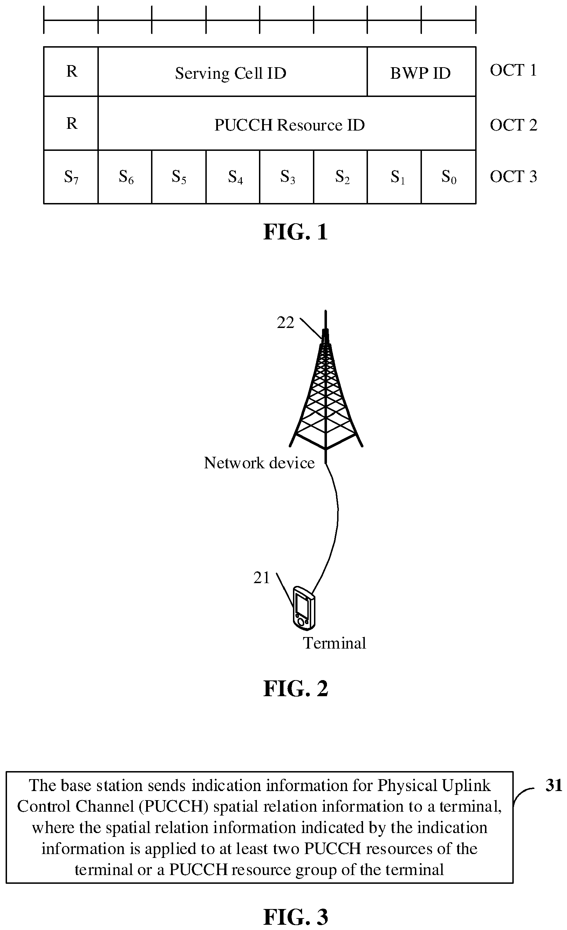

In the fifth-generation New Radio (5G NR), with regard to the indication for Physical Uplink Control Channel (PUCCH) spatial relation information, up to 8 pieces of spatial relation information may be indicated to a terminal (for example, a user equipment, UE) through PUCCH-SpatialRelationInfo in high-level signaling (i.e., PUCCH-Config), and then which spatial relation specifically used by a PUCCH resource corresponding to each PUCCH resource identifier (ID) is indicated through a medium access control layer control element (MAC CE). FIG. 1 illustrates a specific format of the MAC CE, which includes a specific PUCCH resource ID, S0 ~ S7 correspond to 8 spatial relation information respectively, for example, when Sx is 1, it indicates that the spatial relation information corresponding to Sx is activated, and when Sx is 0, it indicates that the spatial relation information corresponding to Sx is deactivated, here a value of x ranges from 0 to 7. S0 to S7 may indicate specific spatial relation information for the PUCCH resource ID.

At present, a terminal may be configured with 4 PUCCH resource sets, and may be configured with up to 128 PUCCH resources in total. The above indication method indicates the spatial relation through the MAC CE per PUCCH resource ID, and thus may cause large MAC CE overhead and delay.

ERICSSON: "Remaining details of beam management", 3GPP DRAFT, R1-1804974 REMAINING DETAILS OF BEAM MANAGEMENT, discusses uplink beam indication.

### SUMMARY

The invention is set out in the appended set of claims.

The claimed invention provides methods for indicating spatial relation information, a base station, a terminal, and computer-readable storage mediums, which can reduce signaling overhead and delay required for indicating the spatial relation information.

In accordance with the invention, a method for indicating spatial relation information, implemented by a base station is provided in claim 1.

In accordance with the invention, a method for indicating spatial relation information, implemented by a terminal is provided in claim 2.

In accordance with the invention, a base station is provided in claim 4.

In accordance with the invention, a terminal is provided in claim 5.

In accordance with the invention, a computer-readable storage medium is provided in claim 6.

In accordance with the invention, a computer-readable storage medium is provided in claim 7.

The method for indicating spatial relation information according to the embodiments of the disclosure configures spatial relation information for a group of or more than two PUCCH resources simultaneously in one indication information, and thus reduces the signaling overhead and delay required for indicating the spatial relation information.

### BRIEF DESCRIPTION OF THE DRAWINGS

By reading detailed descriptions of the following alternative embodiments, various other advantages and benefits will become clear and apparent to those of ordinary skill in the art. The drawings are only used for the purpose of showing alternative embodiments and are not intended to limit to the disclosure. Throughout the drawings, the same reference symbol is used to denote the same component. In the drawings:
FIG. 1 is a schematic structural diagram of an MAC CE of a 5G mobile communication system in the related art;
FIG. 2 is a schematic diagram of an application scenario of spatial relation information according to an embodiment of the disclosure;
FIG. 3 is a first flowchart of a method for indicating spatial relation information according to an embodiment of the disclosure;
FIG. 4 is a schematic structural diagram of a MAC CE for configuring spatial relation information according to an embodiment of the disclosure;
FIG. 5 is a schematic structural diagram of another MAC CE for configuring spatial relation information according to an embodiment of the disclosure;
FIG. 6 is a second flowchart of a method for indicating spatial relation information according to an embodiment of the disclosure;
FIG. 7 is a first structural diagram of a base station according to an embodiment of the disclosure;
FIG. 8 is a second structural diagram of a base station according to an embodiment of the disclosure;
FIG. 9 is a first structural diagram of a terminal according to an embodiment of the disclosure; and
FIG. 10 is a second structural diagram of a terminal according to an embodiment of the disclosure.

### DETAILED DESCRIPTION

In the following, references to the embodiments not being part of the invention are to be understood as examples useful for understanding the invention.

The exemplary embodiments of the disclosure will be described in more detail below with reference to the drawings. Although the exemplary embodiments of the disclosure are shown in the drawings, it should be understood that the disclosure may be implemented in various forms and should not be limited by the embodiments set forth herein. Instead, these embodiments are provided to enable a more thorough understanding of the disclosure.

The terms "first", "second" etc. in the description and claims of the disclosure are used for distinguishing similar objects, and are not used for describing a specific order or sequence. It should be understood that the data used in this manner may be interchanged under appropriate circumstances, so that the embodiments of the disclosure described herein may be implemented for example in an order other than those illustrated or described herein. Furthermore, the terms "including" and "having" and any variations thereof are intended to cover non-exclusive inclusions. For example, a process, method, system, product or device that includes a series of steps or units is not limited to those steps or units clearly listed, instead it may include other steps or units which are not clearly listed or are inherent to these processes, methods, products or devices. In the description and claims, "and/or" means at least one of the connected objects.

The technology described in the disclosure is not limited to a Long Term Evolution (LTE)/LTE-Advanced (LTE-A) system, and may also be used in various wireless communication systems, such as a Code Division Multiple Access (CDMA) system, a Time Division Multiple Access (TDMA) system, a Frequency Division Multiple Access (FDMA) system, a Orthogonal Frequency Division Multiple Access (OFDMA) system, a Single-carrier Frequency Division Multiple Access (SC-FDMA) system, and other systems. The terms "system" and "network" are often used interchangeably. The CDMA system may implement radio technologies such as CDMA2000 and Universal Terrestrial Radio Access (UTRA) etc. UTRA includes Wideband Code Division Multiple Access (WCDMA) and other CDMA variants. The TDMA system may implement radio technologies such as the Global System for Mobile Communication (GSM). The OFDMA system may realize radio technologies such as Ultra-Mobile Broadband (UMB), Evolution UTRA (E-UTRA), IEEE 802.11 (Wi-Fi), IEEE 802.16 (WiMAX), IEEE 802.20, Flash-OFDM etc. UTRA and E-UTRA are parts of Universal Mobile Telecommunications System (UMTS). LTE and more advanced LTE (such as LTE-A) are new UMTS versions that use E-UTRA. UTRA, E-UTRA, UMTS, LTE, LTE-A and GSM are described in documents from an organization named "3rd Generation Partnership Project (3GPP)". CDMA2000 and UMB are described in documents from an organization named "3rd Generation Partnership Project 2 (3GPP2)". The technologies described in the disclosure may be used for the systems and radio technologies mentioned above, as well as other systems and radio technologies. However, the following descriptions describe an NR system for exemplary purposes, and the terms in NR are used in most of the following descriptions, although these technologies may also be applied to applications other than NR system application.

The following descriptions provide examples, applicability or configuration set forth in the claims. Various examples may omit, substitute or add various procedures or components as appropriate. For example, the described method may be performed in an order different from that described, and various steps may be added, omitted or combined. Furthermore, features described with reference to some examples may be combined in other examples.

Referring to FIG. 2, a block diagram of a wireless communication system to which the embodiments of the disclosure are applicable is illustrated. The wireless communication system includes a terminal 21 and a network device 22. Herein, the terminal 21 may also be referred to as a user terminal or a user equipment (UE), and the terminal 21 may be a terminal side device such as a mobile phone, a tablet personal computer, a laptop computer, a Personal Digital Assistant (PDA), a Mobile Internet Device (MID), a wearable device or a vehicle-mounted device etc.. It should be noted that the specific type of the terminal 21 is not limited in the embodiments of the disclosure. The network device 22 may be at least one of a base station or a core network element. The base station may be a base station for 5G and later versions (for example: gNB, 5G NR NB, etc.), or a base station in other communication systems (for example: eNB, WLAN access point, or other access points, etc.). The base station may be referred to as a Node B, an Evolved Node B, an access point, a Base Transceiver Station (BTS), a radio base station, a radio transceiver, a Basic Service Set (BSS), an Extended Service Set (ESS), a Node B, an Evolved Node B (eNB), a home Node B, a home Evolved Node B, a WLAN access point, a Wireless Fidelity (WiFi) node or some other suitable terminology in the field, as long as the same technical effect is achieved, the base station is not limited to specific technical vocabulary. It should be noted that in the embodiments of the disclosure, the base station in the NR system is taken as an example only, but the specific type of the base station is not limited.

The base station may communicate with the terminal 21 under the control of a base station controller. In various examples, the base station controller may be part of a core network or some base stations. Some base stations may perform communication of control information or user data with the core network through backhaul. In some examples, some of the base stations may directly or indirectly communicate with each other through a backhaul link, which may be a wired or wireless communication link. The wireless communication system may support operations on multiple carriers (i.e., waveform signals of different frequencies). A multi-carrier transmitter may transmit modulated signals on the multiple carriers simultaneously. For example, each communication link may be a multi-carrier signal modulated according to various radio technologies. Each modulated signal may be transmitted on a different carrier and may carry control information (for example, a reference signal, a control channel, etc.), overhead information, data etc.

The base station may perform wireless communication with the terminal 21 via one or more access point antennas. Each base station may provide communication coverage for its corresponding coverage area. A coverage area of an access point may be divided into sectors that constitute part of the coverage area only. The wireless communication system may include different types of base stations (for example, a macro base station, a micro base station or a pico base station). The base station may also use different radio technologies, such as cellular or WLAN radio access technologies. The base stations may be associated with the same or different access networks or operator deployments. The coverage areas of different base stations (including coverage areas of the same or different types of base stations, coverage areas using the same or different radio technologies, or coverage areas belonging to the same or different access networks) may overlap.

The communication link in the wireless communication system may include an uplink for carrying uplink (UL) transmission (for example, from the terminal 21 to the network device 22), or a downlink for carrying downlink (DL) transmission (for example, from the network device 22 to the terminal 21). The UL transmission may also be referred to as reverse link transmission, and the DL transmission may also be referred to as forward link transmission. The DL transmission may be performed by using licensed frequency bands, unlicensed frequency bands, or both. Similarly, the UL transmission may be performed by using licensed frequency bands, unlicensed frequency bands, or both.

Referring to FIG. 3, an embodiment of the disclosure provides a method for indicating spatial relation information. The method is applied to a base station and includes the following operation.

In 31: the base station sends indication information for Physical Uplink Control Channel (PUCCH) spatial relation information to a terminal. The spatial relation information indicated by the indication information is applied to at least two PUCCH resources of the terminal or a PUCCH resource group of the terminal; herein the PUCCH resource group includes at least one PUCCH resource.

Specifically, the indication information may be MAC CE.

Through the above operation, the embodiment of the disclosure indicates spatial relation information for a group of or more than two PUCCH resources to the terminal through one indication information, thereby improving the efficiency for indicating the spatial relation information and reducing the signaling overhead and delay required for indicating the spatial relation information.

As an implementation, in the operation 31, the base station sends first indication information for the PUCCH spatial relation information to the terminal. The first indication information carries any PUCCH resource identifier and spatial relation information for activation/deactivation, and the spatial relation information for activation/deactivation applies to all PUCCH resources configured for the terminal. Specifically, MAC CE used for the spatial relation information in the related art, that is, MAC CE shown in FIG. 1, may be used, and the first indication information is sent by using the MAC CE. At this point, the PUCCH resource identifier carried in the MAC CE may be any PUCCH resource identifier, for example, the identifier of any PUCCH resource of the terminal.

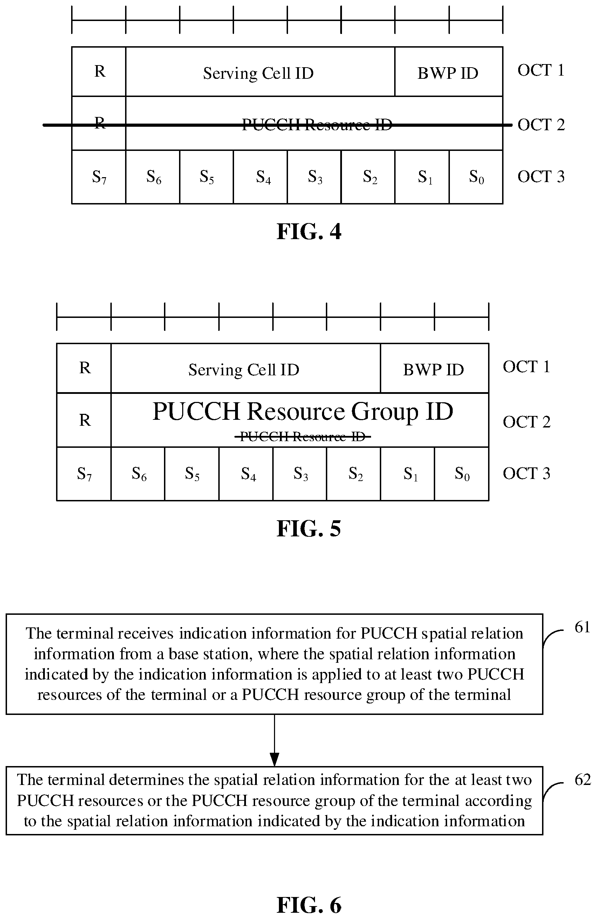

As another implementation, in the operation 31, the base station sends second indication information for the PUCCH spatial relation information to the terminal. The second indication information carries spatial relation information for activation/deactivation but does not carry any PUCCH resource identifier, and the spatial relation information for activation/deactivation is used for all PUCCH resources configured for the terminal. Specifically, MAC CE used for the spatial relation information in the related art may be enhanced to introduce a new MAC CE, and the second indication information is sent by using the new MAC CE. At this point, the MAC CE does not carry any PUCCH resource identifier but carries spatial relation information for activation/deactivation. FIG. 4 shows a schematic structural diagram of the MAC CE, the long horizontal line in the FIG. 4 represents that Oct2 with 8-bit may be reserved.

As yet another implementation, in the operation 31, the base station sends third indication information for the PUCCH spatial relation information to the terminal. The third indication information carries a group identifier of a first PUCCH resource group and spatial relation information for activation/deactivation, and the spatial relation information for activation/deactivation is used for all PUCCH resources in the first PUCCH resource group. Specifically, MAC CE used for the spatial relation information in the related art may be enhanced to introduce a new MAC CE, and the third indication information is sent by using the new MAC CE. At this point, the MAC CE carries the group identifier of the PUCCH resource group (i.e., PUCCH Resource Group ID) and spatial relation information for activation/deactivation. FIG. 5 shows a schematic structural diagram of the MAC CE, the "PUCCH Resource Group ID" in the FIG. 5 represents an improvement to the (PUCCH Resource ID) field of the MAC CE in the related art.

In the embodiment of the disclosure, when the PUCCH resource group is used for indicating the spatial relation information, before the operation 31, the base station sends PUCCH resource group configuration information to the terminal. The configuration information is used for configuring the PUCCH resource(s) in the PUCCH resource group. For example, the base station may configure the PUCCH resource group for the terminal in advance through high-level signaling such as RRC signaling. Specifically, the PUCCH resource group may include the group identifier of the PUCCH resource group and one or more PUCCH resources included in the PUCCH resource group.

The above descriptions provide the flow of the method for indicating spatial relation information according to the embodiment of the disclosure on the base station side. The process on the terminal side is further described below in combination with FIG. 6. As illustrated in FIG. 6, when being applied to the terminal, the method for indicating spatial relation information according to the embodiment of the disclosure includes the following operations.

In 61: the terminal receives indication information for Physical Uplink Control Channel (PUCCH) spatial relation information from a base station. The spatial relation information indicated by the indication information is applied to at least two PUCCH resources of the terminal or a PUCCH resource group of the terminal. The PUCCH resource group includes at least one PUCCH resource.

Here, the indication information is carried by MAC CE.

In 62: the terminal determines the spatial relation information vthe at least two PUCCH resources or the PUCCH resource group of the terminal according to the spatial relation information indicated by the indication information.

Through the above operations, the terminal obtains the spatial relation information for multiple or a group of PUCCH resources by receiving the indication information once, thereby improving the efficiency for indicating the spatial relation information and reducing the signaling overhead and delay required for indicating the spatial relation information.

After the operation 62, the terminal according to the embodiment of the disclosure also performs PUCCH transmission according to the spatial relation information for the at least two PUCCH resources or the PUCCH resource group of the terminal. For example, the corresponding transmission beam is determined according to the spatial relation information, to perform PUCCH transmission.

Specifically, as an implementation, the indication information carries any PUCCH resource identifier and spatial relation information for activation/deactivation. In this case, in the operation 62, the terminal determines, according to the spatial relation information for activation/deactivation carried in the indication information, spatial relation information for all PUCCH resources configured for the terminal.

Specifically, as another implementation, the indication information carries spatial relation information for activation/deactivation while does not carry any PUCCH resource identifier. In this case, in the operation 62, the terminal determines, according to the spatial relation information for activation/deactivation carried in the indication information, spatial relation information for all the PUCCH resources configured for the terminal.

Specifically, as yet another implementation, the third indication information carries a group identifier of a first PUCCH resource group and spatial relation information for activation/deactivation. In this case, in the operation 62, the terminal determines, according to the spatial relation information for activation/deactivation carried in the indication information, spatial relation information for all PUCCH resources in the first PUCCH resource group.

When the PUCCH resource group is used for indicating the spatial relation information, before the operation 61, the terminal receives PUCCH resource group configuration information from the base station. The configuration information is used for configuring the PUCCH resource group of the terminal and PUCCH resource(s) in the PUCCH resource group. The PUCCH resource group of the terminal is determined based on the configuration information. For example, high-level signaling such as RRC signaling sent by the base station is received. The high-level signaling includes the group identifier of the PUCCH resource group and one or more PUCCH resources included in the PUCCH resource group.

Based on the above method, the embodiment of the disclosure also provides a device for implementing the above method.

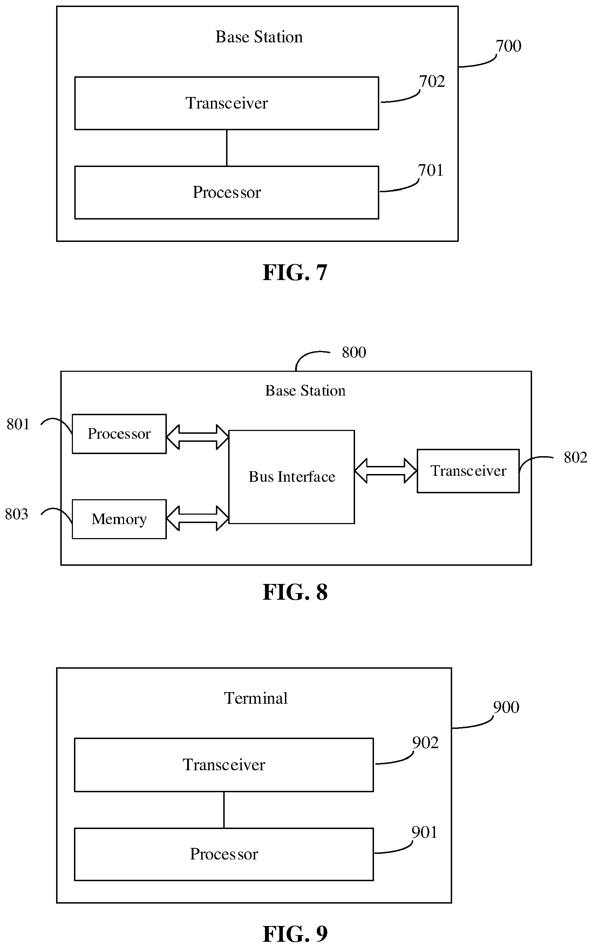

Referring to FIG. 7, an embodiment of the disclosure provides a schematic structural diagram of a base station 700 including a processor 701 and a transceiver 702.

The transceiver 702 is configured to send indication information for PUCCH spatial relation information to a terminal. The spatial relation information indicated by the indication information is applied to at least two PUCCH resources of the terminal or a PUCCH resource group of the terminal; herein the PUCCH resource group includes at least one PUCCH resource.

The transceiver 702 is further configured to send first indication information of the PUCCH spatial relation information to the terminal. The first indication information carries any PUCCH resource identifier and spatial relation information for activation/deactivation, and the spatial relation information for activation/deactivation is used for all PUCCH resources configured for the terminal.

The transceiver 702 is further configured to send second indication information for the PUCCH spatial relation information to the terminal. The second indication information carries spatial relation information for activation/deactivation while does not carry any PUCCH resource identifier, and the spatial relation information for activation/deactivation is used for all PUCCH resources configured for the terminal.

The transceiver 702 is further configured to send third indication information for the PUCCH spatial relation information to the terminal. The third indication information carries a group identifier of a first PUCCH resource group and spatial relation information for activation/deactivation, and the spatial relation information for activation/deactivation is used for all PUCCH resources in the first PUCCH resource group.

The transceiver 702 is further configured to send PUCCH resource group configuration information to the terminal. The configuration information is used for configuring PUCCH resource(s) in the PUCCH resource group.

Referring to FIG. 8, an embodiment of the disclosure provides a schematic structural diagram of a base station 800 including a processor 801, a transceiver 802, a memory 803 and a bus interface.

The transceiver 802 is configured to send indication information for PUCCH spatial relation information to a terminal. The spatial relation information indicated by the indication information is applied to at least two PUCCH resources of the terminal or a PUCCH resource group of the terminal; herein the PUCCH resource group includes at least one PUCCH resource.

The transceiver 802 is further configured to send first indication information for the PUCCH spatial relation information to the terminal. The first indication information carries any PUCCH resource identifier and spatial relation information for activation/deactivation, and the spatial relation information for activation/deactivation is used for all PUCCH resources configured for the terminal.

The transceiver 802 is further configured to send second indication information for the PUCCH spatial relation information to the terminal. The second indication information carries spatial relation information for activation/deactivation while does not carry any PUCCH resource identifier, and the spatial relation information for activation/deactivation is used for all PUCCH resources configured for the terminal.

The transceiver 802 is further configured to send third indication information for the PUCCH spatial relation information to the terminal. The third indication information carries a group identifier of a first PUCCH resource group and spatial relation information for activation/deactivation, and the spatial relation information for activation/deactivation is used for all PUCCH resources in the first PUCCH resource group.

The transceiver 802 is further configured to send PUCCH resource group configuration information to the terminal, the configuration information is used for configuring the PUCCH resource(s) in the PUCCH resource group.

In FIG. 8, the bus architecture includes any number of interconnected buses and bridges. Specifically, one or more processors represented by the processor 801 and various circuits of the memory represented by the memory 803 are linked together. The bus architecture may also link various other circuits such as peripheral devices, voltage regulators, power management circuits, etc. together, all the circuits are well-known in the art, and thus no further descriptions thereof are provided in the disclosure. The bus interface provides an interface. The transceiver 802 may be multiple elements, that is, may include a transmitter and a receiver, and provide a unit for communicating with various other devices on a transmission medium.

The processor 801 is in charge of managing the bus architecture and general processing, and the memory 803 may store data used by the processor 801 when performing operations.

Referring to FIG. 9, an embodiment of the disclosure provides a terminal 900 including a processor 902 and a transceiver 901.

The transceiver 902 is configured to receive indication information for PUCCH spatial relation information from a base station. The spatial relation information indicated by the indication information is applied to at least two PUCCH resources of the terminal or a PUCCH resource group of the terminal. The PUCCH resource group includes at least one PUCCH resource.

The processor 901 is configured to determine, according to the spatial relation information indicated by the indication information, the spatial relation information for the at least two PUCCH resources or the PUCCH resource group of the terminal.

The processor 901 is further configured to perform PUCCH transmission according to the spatial relation information for the at least two PUCCH resources or the PUCCH resource group of the terminal.

The indication information carries any PUCCH resource identifier and spatial relation information for activation/deactivation; and the processor 901 is further configured to determine, according to the spatial relation information for activation/deactivation carried in the indication information, spatial relation information for all PUCCH resources configured for the terminal.

The indication information carries spatial relation information for activation/deactivation while does not carry any PUCCH resource identifier; and the processor 901 is further configured to determine, according to the spatial relation information for activation/deactivation indicated by the indication information, spatial relation information for all PUCCH resources configured for the terminal.

The indication information carries a group identifier of a first PUCCH resource group and spatial relation information for activation/deactivation, and the processor 901 is further configured to determine, according to the spatial relation information for activation/deactivation indicated by the indication information, spatial relation information for all PUCCH resources in the first PUCCH resource group.

The transceiver 902 is further configured to receive PUCCH resource group configuration information sent by the base station. The configuration information is used for configuring the PUCCH resource group of the terminal and PUCCH resource(s) in the PUCCH resource group.

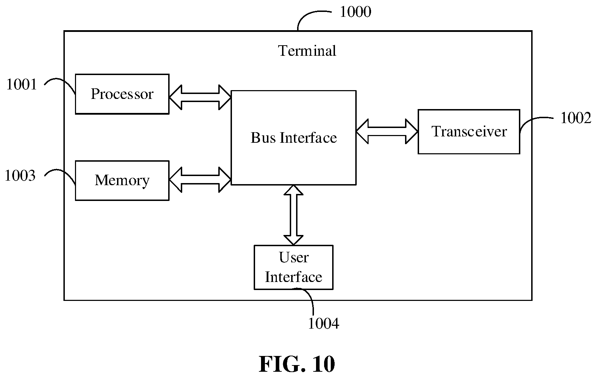

Referring to FIG. 10, another schematic structural diagram of a terminal according to an embodiment of the disclosure is illustrated. The terminal 1000 includes a processor 1001, a transceiver 1002, a memory 1003, a user interface 1004 and a bus interface.

In the embodiment of the disclosure, the terminal 1000 further includes a computer program stored in the memory 1003 and executable by the processor 1001.

The transceiver 1002 is configured to receive indication information for PUCCH spatial relation information sent by a base station. The spatial relation information indicated by the indication information is applied to at least two PUCCH resources of the terminal or a PUCCH resource group of the terminal. The PUCCH resource group includes at least one PUCCH resource.

The processor 1001 is configured to read the program from the memory and perform the following process: determining, according to the spatial relation information indicated by the indication information, the spatial relation information for the at least two PUCCH resources or the PUCCH resource group of the terminal.

The processor 1001 is further configured to perform PUCCH transmission according to the spatial relation information for the at least two PUCCH resources or the PUCCH resource group of the terminal.

The transceiver 1002...

The indication information carries any PUCCH resource identifier and spatial relation information for activation/deactivation; and the processor 1001 is further configured to determine, according to the spatial relation information for activation/deactivation indicated by the indication information, spatial relation information for all PUCCH resources configured for the terminal.

The indication information carries spatial relation information for activation/deactivation while does not carry any PUCCH resource identifier; and the processor 1001 is further configured to determine, according to the spatial relation information for activation/deactivation carried in the indication information, spatial relation information for all the PUCCH resources configured for the terminal.

The indication information carries a group identifier of a first PUCCH resource group and spatial relation information for activation/deactivation, and the processor 1001 is further configured to determine, according to the spatial relation information for activation/deactivation indicated by the indication information, spatial relation information for all PUCCH resources in the first PUCCH resource group.

The transceiver 1002 is further configured to receive PUCCH resource group configuration information sent by the base station. The configuration information is used for configuring the PUCCH resource group of the terminal and the PUCCH resource(s) in the PUCCH resource group.

In FIG. 10, the bus architecture may include any number of interconnected buses and bridges. Specifically, one or more processors represented by the processor 1001 and various circuits of the memory represented by the memory 1003 are linked together. The bus architecture may also link various other circuits such as peripheral devices, voltage regulators, power management circuits, etc. together, all the circuits are well-known in the art, and thus no further descriptions thereof are provided in the disclosure. The bus interface provides a interface. The transceiver 1002 may be multiple elements, that is, may include a transmitter and a receiver, and provide a unit for communicating with various other devices on a transmission medium. For different UEs, the user interface 1004 may also be an interface capable of connecting with the desired devices externally and internally. The connected devices include but not limited to a keypad, a display, a speaker, a microphone, a joystick etc.

The processor 1001 is in charge of managing the bus architecture and general processing, and the memory 1003 may store data used by the processor 1001 when performing operations.

Those of ordinary skill in the art may realize that the units and algorithm operations of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods.

Those skilled in the art may clearly learn that specific working processes of the system, device and unit described above may refer to the corresponding processes in the method embodiment and will not be elaborated herein for convenient and brief description.

In the embodiments provided by the disclosure, it should be understood that the disclosed device and method may be implemented in other manners. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between displayed or discussed components may be indirect coupling or communication connection, implemented through some interfaces, between devices or the units, and may be electrical, mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions in the embodiments of the disclosure according to a practical requirement.

In addition, the functional units in the embodiments of the disclosure may be integrated into a processing unit, or each unit may physically exist independently, or two or more units may be integrated into a unit.

When being realized in form of software functional unit and sold or used as an independent product, the function units may be stored in a computer-readable storage medium. Based on such an understanding, the technical solutions of the disclosure substantially or parts making contributions to the conventional art or part of the technical solutions may be embodied in form of software product, and the computer software product is stored in a storage medium, including multiple instructions configured to enable a computer device (which may be a personal computer, a server, a network device or the like) to execute all or part of the operations of the method for indicating spatial relation information according to each of the embodiments of the disclosure. The storage medium includes: various media capable of storing program codes such as a U disk, a mobile hard disk, a ROM, a RAM, a magnetic disk or an optical disk, etc.

## Claims

1. A method for indicating spatial relation information, performed by a base station, the method comprising:
sending (31), by the base station, indication information for Physical Uplink Control Channel, PUCCH, spatial relation information to a terminal, wherein the indication information is sent in a medium access control layer control element, MAC CE, comprising three Octets, the spatial relation information indicated by the indication information is applied to at least two PUCCH resources of the terminal;
**characterized in that** the indication information carries spatial relation information for activation/deactivation of a spatial relation of the PUCCH resources in 8 bits in the third Octet but does not carry any PUCCH resource identifier in the second Octet, and the spatial relation information for activation/deactivation that is included in the 8 bits in the third Octet is used for all PUCCH resources configured for the terminal.

2. A method for indicating spatial relation information, performed by a terminal, the method comprising:
receiving (61), by the terminal, indication information for Physical Uplink Control Channel, PUCCH, spatial relation information from a base station, wherein the indication information is sent in a medium access control layer control element, MAC CE, comprising three Octets, the spatial relation information indicated by the indication information is applied to at least two PUCCH resources of the terminal; and
determining (62), by the terminal, the spatial relation information for the at least two PUCCH resources of the terminal according to the spatial relation information indicated by the indication information,
**characterized in that** the indication information carries spatial relation information for activation/deactivation of a spatial relation of the PUCCH resources in 8 bits in the third Octet but does not carry any PUCCH resource identifier in the second Octet; and determining the spatial relation information for the at least two PUCCH resources of the terminal according to the spatial relation information indicated by the indication information comprises: determining, according to the spatial relation information for activation/deactivation that is included in the 8 bits in the third Octet carried in the indication information, spatial relation information for all PUCCH resources configured for the terminal.

3. The method of claim 2, further comprising:
performing PUCCH transmission according to the spatial relation information for the at least two PUCCH resources of the terminal.

4. Abase station (700), comprising:
a processor (701); and
a transceiver (702);
wherein the processor is configured to perform, through the transceiver, the method for indicating spatial relation information of claim 1.

5. A terminal (900), comprising:
a processor (901); and
a transceiver (902);
wherein the processor is configured to perform, thourgh the transceiver, the method for indicating spatial relation information of claim 2 or 3.

6. A computer-readable storage medium comprising instructions which when executed by a processor of a base station, causes the base station to perform the method for indicating spatial relation information of claim 1.

7. A computer-readable storage medium comprising instructions which when executed by a processor of a terminal, causes the terminal to perform the method for indicating spatial relation information of claim 2 or 3.

## Patentansprüche

1. Verfahren zum Anzeigen von Informationen über räumliche Beziehungen, das durch eine Basisstation durchgeführt wird, wobei das Verfahren umfasst:
Senden (31), durch die Basisstation, von Anzeigeinformation für Informationen über räumliche Beziehungen für einen Physical Uplink Control Channel, PUCCH, an ein Endgerät, wobei die Anzeigeinformationen in einem Steuerelement der Medienzugriffssteuerungsschicht, MAC CE, das drei Oktette umfasst, gesendet werden, wobei die durch die Anzeigeinformationen angezeigten Informationen über räumliche Beziehungen auf wenigstens zwei PUCCH-Ressourcen des Endgeräts angewendet werden;
**dadurch gekennzeichnet, dass** die Anzeigeinformationen Informationen über räumliche Beziehungen für die Aktivierung/Deaktivierung einer räumlichen Beziehung der PUCCH-Ressourcen in 8 Bits in dem dritten Oktett tragen, aber keine PUCCH-Ressourcen-Kennung in dem zweiten Oktett tragen, und die Informationen über räumliche Beziehungen für die Aktivierung/Deaktivierung, die in den 8 Bits in dem dritten Oktett beinhaltet sind, für alle für das Endgerät konfigurierten PUCCH-Ressourcen verwendet wird.

2. Verfahren zum Anzeigen von Informationen über räumliche Beziehungen, das durch ein Endgerät durchgeführt wird, wobei das Verfahren umfasst:
Empfangen (61), durch das Endgerät, von Anzeigeinformationen für Informationen über räumliche Beziehungen für einen Physical Uplink Control Channel, PUCCH, von einer Basisstation, wobei die Anzeigeinformationen in einem Steuerelement der Medienzugriffssteuerungsschicht, MAC CE, das drei Oktette umfasst, gesendet werden, wobei die durch die Anzeigeinformationen angezeigten Informationen über räumliche Beziehungen auf wenigstens zwei PUCCH-Ressourcen des Endgeräts angewendet werden; und
Bestimmen (62), durch das Endgerät, der Informationen über räumliche Beziehungen für die wenigstens zwei PUCCH-Ressourcen des Endgeräts gemäß den durch die Anzeigeinformationen angezeigten Informationen über räumliche Beziehungen,
**dadurch gekennzeichnet, dass** die Anzeigeinformationen Informationen über räumliche Beziehungen für die Aktivierung/Deaktivierung einer räumlichen Beziehung der PUCCH-Ressourcen in 8 Bits in dem dritten Oktett tragen, aber keine PUCCH-Ressourcen-Kennung in dem zweiten Oktett tragen; und das Bestimmen der Informationen über räumliche Beziehungen an den wenigstens zwei PUCCH-Ressourcen des Endgeräts gemäß den durch die Anzeigeinformationen angezeigten Informationen über räumliche Beziehungen umfasst: Bestimmen gemäß den Informationen über räumliche Beziehungen für die Aktivierung/Deaktivierung, die in den 8 Bits in dem dritten Oktett beinhaltet sind, das in den Anzeigeinformationen getragen wird, von Informationen über räumliche Beziehungen für alle für das Endgerät konfigurierten PUCCH-Ressourcen.

3. Verfahren nach Anspruch 2, das ferner umfasst:
Durchführen einer PUCCH-Übertragung gemäß den Informationen über räumliche Beziehungen für die wenigstens zwei PUCCH-Ressourcen des Endgeräts.

4. Basisstation (700), umfassend:
einen Prozessor (701); und
einen Sendeempfänger (702);
wobei der Prozessor dazu konfiguriert ist, über den Sendeempfänger das Verfahren zum Anzeigen von Informationen über räumliche Beziehungen nach Anspruch 1 durchzuführen.

5. Endgerät (900), umfassend:
einen Prozessor (901); und
einen Sendeempfänger (902);
wobei der Prozessor dazu konfiguriert ist, über den Sendeempfänger das Verfahren zum Anzeigen von Informationen über räumliche Beziehungen nach Anspruch 2 oder 3 durchzuführen.

6. Computerlesbares Speichermedium, umfassend Anweisungen, die, wenn sie von einem Prozessor einer Basisstation ausgeführt werden, die Basisstation veranlassen, das Verfahren zum Anzeigen von Informationen über räumliche Beziehungen nach Anspruch 1 durchzuführen.

7. Computerlesbares Speichermedium, umfassend Anweisungen, die, wenn sie von einem Prozessor eines Endgerätes ausgeführt werden, das Endgerät veranlassen, das Verfahren zum Anzeigen von Informationen über räumliche Beziehungen nach Anspruch 2 oder 3 durchzuführen.

## Revendications

1. Procédé d'indication d'informations de relation spatiale, exécuté par une station de base, le procédé comprenant :
l'envoi (31), par la station de base, d'informations d'indication pour des informations de relation spatiale pour un canal de commande de liaison montante physique, PUCCH, à un terminal, dans lequel les informations d'indication sont envoyées dans un élément de commande de couche de commande d'accès au support, MAC CE, comprenant trois octets, les informations de relation spatiale indiquées par les informations d'indication sont appliquées à au moins deux ressources PUCCH du terminal ;
**caractérisé en ce que** les informations d'indication portent des informations de relation spatiale pour l'activation/la désactivation d'une relation spatiale des ressources PUCCH dans 8 bits dans le troisième octet mais ne portent aucun identifiant de ressource PUCCH dans le deuxième octet,
et les informations de relation spatiale pour l'activation/la désactivation qui sont incluses dans les 8 bits dans le troisième octet sont utilisées pour toutes les ressources PUCCH configurées pour le terminal.

2. Procédé pour d'indication d'informations de relation spatiale, exécuté par un terminal, le procédé comprenant :
la réception (61), par le terminal, d'informations d'indication pour des informations de relation spatiale pour un canal de commande de liaison montante physique, PUCCH, provenant d'une station de base, dans lequel les informations d'indication sont envoyées dans un élément de commande de couche de commande d'accès au support, MAC CE, comprenant trois octets, les informations de relation spatiale indiquées par les informations d'indication sont appliquées à au moins deux ressources PUCCH du terminal ; et
la détermination (62), par le terminal, des informations de relation spatiale pour les au moins deux ressources PUCCH du terminal selon les informations de relation spatiale indiquées par les informations d'indication,
**caractérisé en ce que** les informations d'indication portent des informations de relation spatiale pour l'activation/la désactivation d'une relation spatiale des ressources PUCCH dans 8 bits dans le troisième octet mais ne porte aucun identifiant de ressource PUCCH dans le deuxième octet ; et
la détermination des informations de relation spatiale pour les au moins deux ressources PUCCH du terminal selon les informations de relation spatiale indiquées par les informations d'indication comprend :
la détermination, selon les informations de relation spatiale pour l'activation/la désactivation qui sont incluses dans les 8 bits dans le troisième octet portées dans les informations d'indication,
d'informations de relation spatiale pour toutes les ressources PUCCH configurées pour le terminal.

3. Procédé selon la revendication 2, comprenant en outre :
l'exécution d'une transmission PUCCH selon les informations de relation spatiale pour les au moins deux ressources PUCCH du terminal.

4. Station de base (700), comprenant :
un processeur (701) ; et
un émetteur-récepteur (702) ;
dans lequel le processeur est configuré pour exécuter, par l'intermédiaire de l'émetteur-récepteur, le procédé pour indiquer des informations de relation spatiale selon la revendication 1.

5. Terminal (900), comprenant :
un processeur (901) ; et
un émetteur-récepteur (902) ;
dans lequel le processeur est configuré pour exécuter, par l'intermédiaire de l'émetteur-récepteur, le procédé pour indiquer des informations de relation spatiale selon la revendication 2 ou 3.

6. Support de stockage lisible par ordinateur comprenant des instructions qui, lorsqu'elles sont exécutées par un processeur d'une station de base, amènent la station de base à exécuter le procédé d'indication d'informations de relation spatiale selon la revendication 1.

7. Support de stockage lisible par ordinateur comprenant des instructions qui, lorsqu'elles sont exécutées par un processeur d'un terminal, amènent le terminal à exécuter le procédé d'indication d'informations de relation spatiale selon la revendication 2 ou 3.
